(19)

Europäisches Patentamt

European Patent Office

Office européen des brevets

(11) **EP 4 607 734 A1**

(12) **EUROPEAN PATENT APPLICATION**
published in accordance with Art. 153(4) EPC

(43) Date of publication:
**27.08.2025 Bulletin 2025/35**

(21) Application number: **23878742.8**

(22) Date of filing: **24.07.2023**

(51) International Patent Classification (IPC):
**H02J 3/24** (2006.01)     **H02J 3/46** (2006.01)

(52) Cooperative Patent Classification (CPC):
**Y02E 10/76**

(86) International application number:
**PCT/CN2023/108874**

(87) International publication number:
**WO 2024/082746 (25.04.2024 Gazette 2024/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.10.2022   CN 202211287631**

(71) Applicant: **GOLDWIND SCIENCE & TECHNOLOGY CO., LTD.**
**Xinjiang 830026 (CN)**

(72) Inventors:
• **ZUO, Meiling**
  **Beijing 100176 (CN)**
• **YU, Chi**
  **Beijing 100176 (CN)**
• **XU, Xu**
  **Beijing 100176 (CN)**

(74) Representative: **Hoffmann Eitle**
**Patent- und Rechtsanwälte PartmbB**
**Arabellastraße 30**
**81925 München (DE)**

(54) **FREQUENCY RESPONSE CONTROL METHOD AND DEVICE FOR WIND FARM**

(57)     Provided are a frequency response control method and device for a wind farm. The frequency response control method comprises: periodically determining a full-field power regulation quantity which is caused by the frequency and/or the frequency change rate of a grid connection point and required for regulation in a wind farm; when in a primary frequency modulation mode, periodically determining the actual full-field power deficit according to the current full-field power regulation quantity; according to the current actual full-field power deficit and the variable-pitch adjustable power of each unit in the wind farm within a future preset duration, determining the single-unit power regulation quantity of each unit; and issuing the corresponding single-unit power regulation quantity to each unit, so that each unit adjusts output power according to the corresponding single-unit power regulation quantity.

A total power regulation amount required to be regulated by the wind farm caused by a frequency and/or a frequency change rate of a grid connection point is periodically determined — S101

An actual total power-shortage is periodically determined based on a currently-determined total power regulation amount, in a case that the wind farm is in a primary frequency control mode — S102

A turbine power regulation amount of each wind turbine is determined based on a currently-determined actual total power shortage and a pitch regulatable power of each wind turbine in a subsequent preset time period — S103

A corresponding turbine power regulation amount is sent to each wind turbine, to enable the wind turbine to regulate an output power based on the corresponding turbine power regulation amount — S104

FIG. 4

## Description

## FIELD

The present disclosure generally relates to the field of power technology, and in particular to a frequency response control method and apparatus for a wind farm.

## BACKGROUND

Primary Frequency Control (PFR) refers to a control function in which a wind farm regulates an active output through an automatic response of a control system to reduce a frequency deviation of a power system, in response to a frequency of the power system (for example, a power grid) deviating from a target frequency. Automatic Generation Control (AGC) refers to a service in which the wind farm, through automatic control procedures, follows instructions issued by a power dispatching and trading agency within a specified output regulation range and regulates a power generation output in real time at a certain regulating rate, thereby meeting a frequency and power control requirement of the power system.

The primary frequency control technology is initially applied in the northwest grid and northeast grid of China. While at present, the primary frequency control technology has become a mandatory requirement for grid connection, and a technical requirement is more stringent. At present, a frequency response function is required in grid connection testing around the world, and requirements of power grids in different regions of the world are different. Therefore, it is necessary to improve the frequency response control method for a wind farm to cover various requirements.

## SUMMARY

The objective of the embodiment of the present disclosure is to provide a frequency response control method and apparatus for a wind farm, so that an output power of the wind farm is regulated effectively to meet a frequency control requirement of a power grid.

A frequency response control method for a wind farm is provided in a first aspect according to the embodiment of the present disclosure, the frequency response control method for the wind farm includes: periodically determining a total power regulation amount required to be regulated by the wind farm caused by a frequency and/or a frequency change rate of a grid connection point; periodically determining an actual total power-shortage based on a currently-determined total power regulation amount, in a case that the wind farm is in a primary frequency control mode; determining a turbine power regulation amount of each wind turbine based on a currently-determined actual total power shortage and a pitch regulatable power of each wind turbine in a subsequent preset time period; and sending a corresponding turbine power regulation amount to each wind turbine, to enable the wind turbine to regulate an output power based on the corresponding turbine power regulation amount.

A frequency response control apparatus for a wind farm is provided in a second aspect according to the embodiment of the present disclosure, the frequency response control apparatus for the wind farm includes: a total power regulation amount determining unit, configured to periodically determine a total power regulation amount required to be regulated by the wind farm caused by a frequency and/or a frequency change rate of a grid connection point; an actual total power shortage determining unit, configured to periodically determine an actual total power-shortage based on a currently-determined total power regulation amount, in a case that the wind farm is in a primary frequency control mode; a turbine power regulation amount determining unit, configured to determine a turbine power regulation amount of each wind turbine based on a currently-determined actual total power shortage and a pitch regulatable power of each wind turbine in a subsequent preset time period; and a sending unit, configured to send a corresponding turbine power regulation amount to each wind turbine, to enable the wind turbine to regulate an output power based on the corresponding turbine power regulation amount.

A computer-readable storage medium storing a computer program is provided in a third aspect according to the embodiment of the present disclosure, where the computer program, when executed by a processor, prompting the processor to execute the frequency response control method for a wind farm described above.

A frequency response control device for a wind farm is provided in a fourth aspect according to the embodiment of the present disclosure. The frequency response control device for a wind farm includes: a processor; and a memory storing a computer program, where the computer program, when executed by the processor, prompting the processor to execute the frequency response control method for a wind farm described above.

According to the frequency response control method and apparatus for a wind farm according to the exemplary embodiment of the present disclosure, a cascade frequency response control method based on the frequency closed loop of the grid connection point, power closed loop, and small-step regulation is proposed to control the output power of the wind farm, which effectively meet the grid frequency regulation requirements, significantly improve the control accuracy and shorten the control response time.

In addition, on the basis of the closed-loop of the frequency of the grid connection point and the closed-loop of the power, multiple iterative regulation of power in small steps is superimposed to realize a three-loop cascade control method of primary frequency control.

Additional aspects and/or advantages of the general concept of the present disclosure are partially set forth in the following description. Some other aspects and/or advantages are clarified from the description or can be understood from the practice of the general concept of the present disclosure.

## BRIEF DESCRIPTION OF THE DRAWINGS

The above and/or additional aspects and advantages of the present disclosure will become apparent with reference to the following description of embodiments in conjunction with the drawings.

FIG. 1 shows a topology of a wind farm according to an exemplary embodiment of the present disclosure;

FIG. 2 shows an example of droop control for a primary frequency control according to an embodiment of the present disclosure;

FIG. 3 shows an example of a step response curve for a primary frequency control according to an embodiment of the present disclosure;

FIG. 4 is a flowchart of a frequency response control method for a wind farm according to an exemplary embodiment of the present disclosure;

FIG. 5 shows an example of a primary frequency control mode according to an embodiment of the present disclosure;

FIG. 6 is a flowchart of a frequency response control method for a wind farm according to another exemplary embodiment of the present disclosure;

FIG. 7 shows an example of an inertia response mode according to an embodiment of the present disclosure;

FIG. 8 is a flowchart of a frequency response control method for a wind farm according to another exemplary embodiment of the present disclosure; and

FIG. 9 is a structural block diagram of a frequency response control apparatus for a wind farm according to an exemplary embodiment of the present disclosure.

## DETAILED DESCRIPTION

Reference is made in detail to embodiments of the present disclosure. Examples of the embodiments are illustrated in the drawings, where same reference numerals always represent same components. The embodiments are illustrated hereinafter with reference to the drawings to explain the present disclosure.

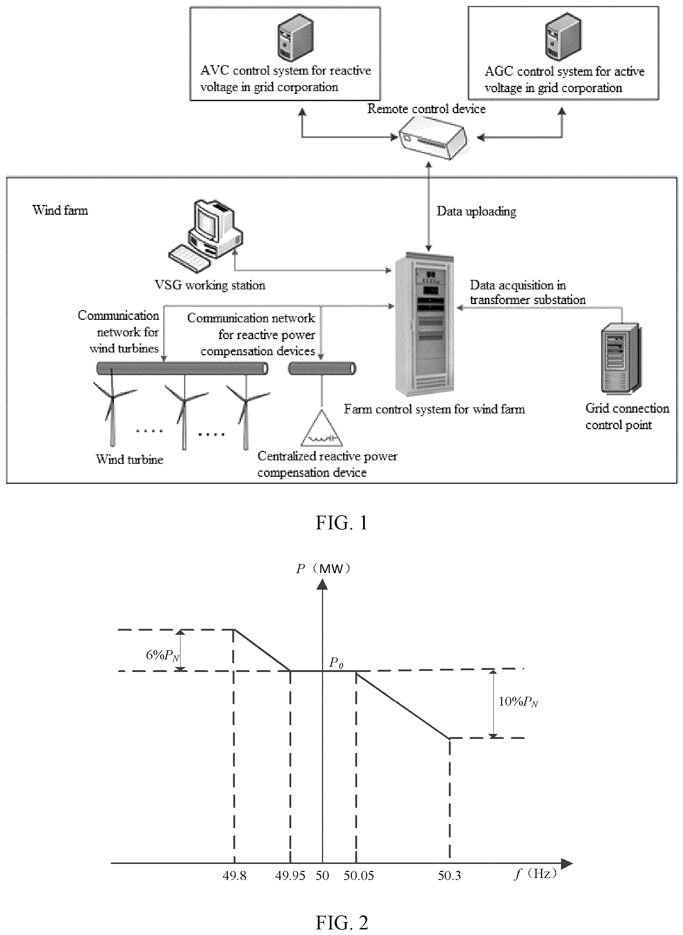

FIG. 1 shows a topology of a wind farm according to an exemplary embodiment of the present disclosure.
As shown in FIG. 1, a wind farm level controller (such as the wind farm control system shown in FIG. 1) of the wind farm serves as a top-level control device to monitor data of a grid connection point, and centrally control all wind turbines (referred to as turbines).
As an example, in a case that high-frequency disturbance occurs in a power grid of the wind farm, a downward regulation of primary frequency control of the wind farm may not be performed any more, in response to a regulation amount of the primary frequency control reaching 10% of a rated output of the wind farm. In a case that low-frequency disturbance occurs in the power grid, an up-regulation of the primary frequency control of the wind farm may not be performed any more, in response to the regulation amount of the primary frequency control reaching 6% of the rated output of the wind farm. (10% and 6% are both recommended set values) The droop feature of the primary frequency control is achieved by setting a frequency and active power broken line function as the formula below:

$$ P = P_0 - \frac{1}{\delta\%} \times P_N \times ( f - f_d ) / f_N \quad ( 1 ) $$

where, P represents a target power value for the wind farm to be reached through the primary frequency control, and is in the unit of MW; $f_d$ represents a dead band for the primary frequency control, and is in the unit of Hz; $f_N$ represents a rated frequency of the grid system, and is in the unit of Hz; $P_N$ represents a rated power, and is in the unit of MW; $\delta\%$ represents a droop coefficient of the primary frequency control for a new energy system; $P_0$ represents an initial active power of the wind farm before the primary frequency control is performed, and is in the unit of MW; and f represents an actual frequency of the power grid currently.
For example, in a case that the dead band for the primary frequency control is set to 0.05 Hz, the droop coefficient is set to 5%, a maximum power limit of the primary frequency control for up-regulation is set to 6% of $P_N$, and a maximum power limit of the primary frequency control for down-regulation is set to 10% of $P_N$, a droop curve of the wind farm participating in the primary frequency control of the power grid is shown in FIG. 2.

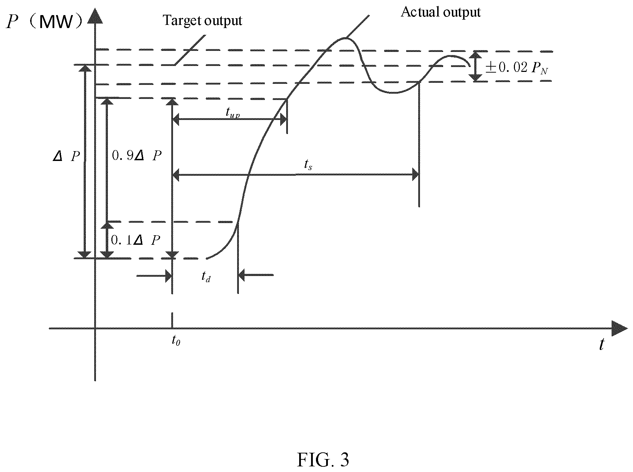

FIG. 3 shows an example of a step response curve for a primary frequency control according to an embodiment of the present disclosure. Here, $t_0$ represents a starting time instant, $t_d$ represents a startup time, $t_{up}$ represents a response time, $t_s$ represents an regulation time, $P_N$ represents the rated power, and $\Delta P$ represents a target power regulation amount.

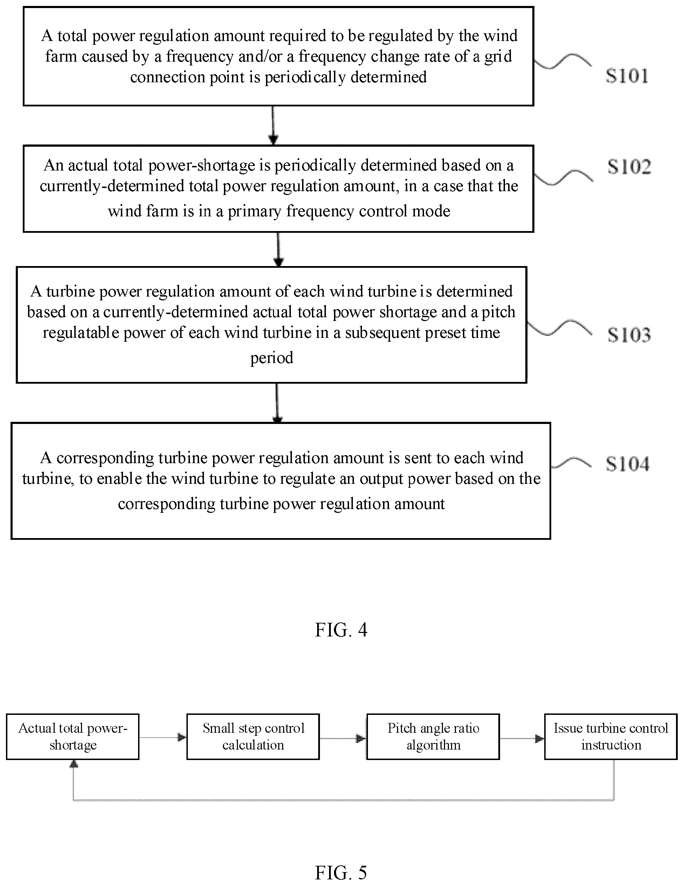

FIG. 4 is a flowchart of a frequency response control method for a wind farm according to an exemplary embodiment of the present disclosure.
As an example, the frequency response control method for a wind farm according to the exemplary embodiment of the present disclosure may be executed by a wind farm level controller of the wind farm. For example, the wind farm level controller may be a Voltage/Var Management Platform (VMP).

The wind farm may include multiple wind turbines, which are connected to the power grid in an appropriate manner.

Reference is made to FIG. 4. In step S101, a total power regulation amount required to be regulated by the wind farm caused by a frequency and/or a frequency change rate of a grid connection point is periodically determined.

The total power regulation amount required to be regulated by the wind farm is an active power increment required to be regulated by the wind farm. It should be understood that the total power regulation amount required to be regulated by the wind farm may be greater than 0 or less than 0. In response to the total power regulation amount required to be regulated by the wind farm being greater than 0, the wind farm is required to increase an active power output, and in response to the total power regulation amount required to be regulated by the wind farm being less than 0, the wind farm is required to decrease the active power output.

As an example, the total power regulation amount may be: a total power regulation amount of the primary frequency control for realizing the primary frequency control. As an example, in a case that an automatic power generation control (AGC) is required to be performed in the wind farm currently, the total power regulation amount may be: a sum of an AGC total power regulation amount for realizing the AGC and a total power regulation amount of the primary frequency control for realizing the primary frequency control.

As an example, the total power regulation amount required to be regulated by the wind farm caused by the frequency and/or the frequency change rate of the grid connection point may be periodically determined from a beginning of a current grid frequency disturbance (for example, the frequency of the grid connection point exceeds a frequency dead band or the frequency change rate of the grid connection point exceeds a frequency change rate dead band) to an end of the current grid frequency disturbance.

As an example, a period for determining the total power regulation amount required to be regulated by the wind farm may be 20 ms.

In step S102, an actual total power-shortage is periodically determined based on a currently-determined total power regulation amount, in a case that the wind farm is in a primary frequency control mode.

As an example, a target total power value to which the wind farm is required to regulate currently may be determined based on a current total power regulation amount firstly, and a difference between the currently-determined target total power value and a currently-determined actual total power is determined as the actual total power shortage.

As an example, a sum of an initial total power at the beginning of the current grid frequency disturbance and the currently-determined total power regulation amount may be determined as the target total power value to which the wind farm is required to regulate currently.

As an example, the actual total power may be the actual power of the grid connection point in the wind farm or a sum of powers of all wind turbines in the wind farm.

As an example, a period for determining the actual total power-shortage may be 20 ms.

In step S103, a turbine power regulation amount of each wind turbine is determined based on a currently-determined actual total power shortage and a pitch regulatable power of each wind turbine in a subsequent preset time period.

As an example, the preset time period may be less than 5 seconds, for example, the preset period may be 1 second or 2 seconds.

As an example, the pitch regulatable power of each wind turbine in the subsequent preset time period includes: a pitch power increasing limit of the wind turbine in the subsequent preset time period and a pitch power decreasing limit of the wind turbine in the subsequent preset time period.

As an example, for each wind turbine, if an pitch angle thereof is great than a minimum pitch angle and the power thereof is less than a maximum power limit, the pitch power increasing limit OneCycleUpPower of the wind turbine in the subsequent preset time period is determined based on a preset pitch power increasing limit of the wind turbine per unit time and a length of the preset time period; otherwise, the pitch power increasing limit of the wind turbine in the subsequent preset time period may be 0. The maximum power limit of the wind turbine refers to: a maximum power that the wind turbine is able to reach under a wind condition and an operating condition at that time. A real-time power may be less than the maximum power limit since the wind turbine may be in a power-limited state. The maximum power limit may be equal to or less than the rated power.

For example, a pitch power increasing limit of a wind turbine having a pitch angle greater than a minimum pitch angle and having a power less than a maximum power limit in the subsequent preset time period is: a product of a preset pitch power increasing limit of the wind turbine per unit time (for example, a preset pitch power increasing limit within 1 second), the preset time period, and a first conversion deviation coefficient.

As an example, for each turbine, if the pitch angle thereof is not equal to a standby pitch angle and the increasing limit of pitch power thereof is greater than or equal to a minimum power limit, the pitch power decreasing limit of the wind turbine in the subsequent preset time period is determined based on a preset pitch power decreasing limit of the wind turbine per unit time,

and a length of the preset time period; otherwise, the pitch power decreasing limit of the wind turbine in the subsequent preset time period may be 0.

For example, a pitch power decreasing limit of a wind turbine having a pitch angle not equal to a standby pitch angle and having a power greater than or equal to a minimum power limit is: a product of a preset pitch power decreasing limit of the wind turbine per unit time, the preset time period, and a second conversion deviation coefficient.

As an example, if the power is required to be increased, when the pitch angle of the wind turbine is greater than the minimum pitch angle PitPosMin, and the power of the wind turbine is less than the maximum power limit LimPwrMaxDmd, OneCycleUpPower (the pitch power increasing limit of the wind turbine in the subsequent preset time period) = ExecutionRate (a regulation capability within a preset time period of 1 second) $\times$ CloseLoopCycle (a single-step cycle length) $\times$ the first conversion deviation coefficient. Here, ExecutionRate (the regulation capability within the preset time period of 1 second) is the pitch power increasing limit within the preset time period of 1 second, the CloseLoopCycle (the single-step cycle length) is the preset time period. For example, the first conversion deviation coefficient may be 0.8.

As an example, if the power is required to be decreased, when the pitch angle of the wind turbine is not equal to the standby pitch angle StandbyPitPos, and the power of the wind turbine is greater than or equal to the minimum power limit LimPwrMinDmd, the OneCycleDwnnPower (the pitch power decreasing limit of the wind turbine in the preset time period) = ExecutionRate (a regulation capability within a preset time period of 1 second) $\times$ CloseLoopCycle (a single-step cycle length) $\times$ the second conversion deviation coefficient. Here, ExecutionRate (the regulation capability within the preset time period of 1 second) is the pitch power decreasing limit within the preset time period of 1 second, the CloseLoopCycle (the single-step cycle length) is the preset time period. For example, the second conversion deviation coefficient may be 0.8.

In an embodiment, in response to the currently-determined actual total power shortage being greater than 0, a total up-regulation power amount in the subsequent preset time period is determined based on a total up-regulation reserve power in the subsequent preset time period and the currently-determined actual total power shortage, and the turbine power regulation amount of each wind turbine is determined based on the total up-regulation power amount in the subsequent preset time period.

As an example, the total up-regulation power amount in the subsequent preset time period is a sum of pitch power increasing limits of wind turbines, each having a pitch angle greater than the minimum pitch angle, and having a power less than the maximum power limit. For example, the total up-regulation reserve power in the subsequent preset time may be: $\sum_{i=0}^{n-1} \text{ExecutionRate}[i] \times \text{CloseLoopCycle} \times 0.8$.

As an example, the actual total power shortage can be determined as the total up-regulation power amount in the subsequent preset time period, in response to the total up-regulation reserve power in the subsequent preset time period being greater than the actual total power shortage; and the total up-regulation reserve power in the subsequent preset time period can be determined as the total up-regulation power amount in the subsequent preset time period, in response to the total up-regulation reserve power in the subsequent preset time period being less than the actual total power shortage.

As an example, for each wind turbine having a pitch angle greater than the minimum pitch angle and having a power less than the maximum power limit, the turbine power regulation amount for the wind turbine can be determined based on a product of an up-regulation weight coefficient of the wind turbine and a total up-regulation power amount in the subsequent preset time period. For example, for each wind turbine having a pitch angle greater than the minimum pitch angle and having a power less than the maximum power limit, a sum of the product of the up-regulation weight coefficient of the wind turbine and the total up-regulation power amount in the subsequent preset time period, and a deviation correction value can be determined as the turbine power regulation amount for the wind turbine. For example, the up-regulation weight coefficient of the wind turbine is: a ratio of a pitch up-regulation power capability of the wind turbine to a sum of pitch up-regulation power capabilities of wind turbines, and the pitch up-regulation power capability of the wind turbine is a product of a difference between an average pitch angle of the wind turbine and a minimum pitch angle of the wind turbine, and a rated power of the wind turbine. It should be understood that the sum of the pitch up-regulation power capabilities of the wind turbines refers to the sum of the pitch up-regulation power capabilities of the wind turbines, each having a pitch angle greater than the minimum pitch angle and having a power less than the maximum power limit.

As an example, the average pitch angle of the wind turbine is: an average value of pitch angles of all blades of the wind turbine.

As an example, if the power is required to be increased, the pitch up-regulation power capability OneCapacity[i] of the wind turbine is calculated by: OneCapacity[i] = (average pitch angle $\beta i$ - minimum pitch angle $\beta min$) $\times$ rated power $P^i_{rated}$; the sum $G_{TotalUPPitch}$ of the pitch up-regulation power capabilities of the wind turbines is calculated by:

$$G_{TotalUPPitch} = \Sigma_0^{n-1}(\beta_i - \beta_{min}) \times P^i_{rated}$$ , and

the up-regulation weight coefficient Proportion[i] of the wind turbine is calculated by: Proportion[i]= (OneCapacity[i])/$G_{TotalUPPitch}$. As an example, a pre-issued instruction DeltPTEMP[i] of the wind turbine is cacluated by: DeltPTEMP[i] = OneCommand[i] + Deviation[i], where OneCommand[i] = Proportion[i]×the total up-regulation power amount, and Deviation[i] is the deviation correction value of the wind turbine. As an example, a pre-issued rate of the wind turbine is PwrRateSetTEMP[i] = SlowPwrRateSet, that is, a flag of the primary for frequency control is issued.

In another embodiment, in response to the currently-determined actual total power shortage being less than 0, a total down-regulation power amount in the subsequent preset time period can be determined based on a total down-regulation reserve power in the subsequent preset time period and the currently-determined actual total power shortage, and the turbine power regulation amount of each wind turbine can be determined based on the total down-regulation power amount in the subsequent preset time period.

As an example, the total down-regulation reserve power in the subsequent preset time period is a sum of pitch decreasing power limits of the wind turbines, each having a pitch angle not equal to the standby pitch angle, and having a power greater than or equal to the minimum power limit in the subsequent preset time period. For example, the total down-regulation reserve power in the subsequent preset time period may be:

$$\sum_{i=0}^{n-1} \text{ExecutionRate[i]} \times \text{CloseLoopCycle} \times 0.8.$$

As an example, the actual total power shortage can be determined as the total down-regulation power amount in the subsequent preset time period, in response to the total down-regulation reserve power in the subsequent preset time period being less than the actual total power shortage; and the total down-regulation reserve power in the subsequent preset time period can be determined as the total down-regulation power amount in the subsequent preset time period, in response to the total down-regulation reserve power in the subsequent preset time period being greater than the actual total power shortage.

As an example, for each wind turbine whose pitch angle is not equal to the standby pitch angle and whose power is greater than or equal to the minimum power limit, the turbine power regulation amount for the wind turbine may be determined based on a product of a down-regulation weight coefficient and the total down-regulation power amount in the subsequent preset time period. For example, for each wind turbine whose pitch angle is not equal to the standby pitch angle and whose power is greater than or equal to the minimum power limit, the turbine power regulation amount for the wind turbine may be determined as a sum of the product of the down-regulation weight coefficient and the total down-regulation power amount in the subsequent preset time period, and a deviation correction value. For example, the down-regulation weight coefficient of each wind turbine may be: a ratio of a pitch down-regulation power capability of the wind turbine to a sum of pitch down-regulation power capabilities of the wind turbines. The pitch down-regulation power capability of the wind turbine is a product of a difference between a standby pitch angle of the wind turbine and an average pitch angle of the wind turbine, and a rated power of the wind turbine. It should be understood that the sum of the pitch down-regulation power capabilities of the wind turbines refers to the sum of thepitch down-regulation power capabilities of the wind turbine, each having a pitch angle not equal to the standby pitch angle and having a power greater than or equal to the minimum power limit.

As an example, when the power is required to be down-regulated, the pitch down-regulation power capability OneCapacity[i] of the wind turbine is calculated by: OneCapacity[i] = (standby pitch angle $\beta$_max -average pitch angle $\beta$_i)×rated power $P^i_{rated}$; the sum $G_{TotalDownPitch}$ of the pitch power down-regulation capabilities of the wind turbines is calculated by:

$$G_{TotalDownPitch} = \sum_0^{n-1} (\beta_{max} - \beta_i) \times P^i_{rated} \quad,$$

and the down-regulation weight coefficient Proportion[i] of the wind turbine is calculated by: Proportion[i]=(OneCapacity[i])/$G_{TotalDownPitch}$. As an example, a pre-issued instruction DeltPTEMP[i] of the wind turbine is cacluated by: DeltPTEMP[i] = OneCommand[i] + Deviation[i], where OneCommand[i] = Proportion[i] × the total down-regulation power amount, and Deviation[i] is the deviation correction value of the wind turbine. As an example, a pre-issued rate PwrRateSetTEMP[i] of the wind turbine is calculated by: PwrRateSetTEMP[i] = SlowPwrRateSet, that is, a flag of the primary for frequency control is issued.

As an example, the deviation correction value of each wind turbine may be: a difference between a current actual power value of the wind turbine and an initial power value P0 of the wind turbine at the beginning of the current grid frequency disturbance.

In the present disclosure, consideration in the related art is made, capacities of wind turbines in the wind farms vary greatly, and existing algorithms for performing allocation based on the regulatable power of the wind turbine will result in excessive regulation for a small-capacity wind turbine, further leading to excessive response time and failing to meet grid requirements. According to an exemplary embodiment of the present disclosure, an algorithm for performing allocation powers based on the pitch angle is used. Allocation is performed based on the adjustable angle of the wind turbine. The regulation depth is not determined by the rated-power difference, and is determined based on a blade angle of the wind turbine. In this way, the regulation amounts of the wind turbines vary greatly, while the relative regulation depth is not increased, which can shorten a normal response time. According to an exemplary embodiment of the present disclosure, the algorithm for allocation powers based on the pitch angle reduces regulatable power margin deviation, improves control accuracy, and has universal applicability both domestically and internationally.

In addition, in the present disclosure, considering that the theoretical power calculation accuracy in the related art is not high enough and a regulatable margin in frequency response control is calculated based on a predicted theoretical power of a wind turbine within an ultra-short period, thus deviation occurs in the control process. At present, improving the response accuracy is demanded due to the increasingly stringent requirement of the power grid. According to the exemplary embodiment of the present disclosure, the predicted theoretical power of the wind turbine within the ultra-short period is only used as a reference for grid regulation, and is not used as a basis for specific control, thereby improving the control response accuracy.

In addition, in the present disclosure, the following problem of an AGC device, for example, the Energy Management Platform (EMP) in the related art is taken into account. In the EMP, after low-frequency alternate function of the EMP is activated, a regulatable power sent to a dispatcher in the EMP is significantly different from the regulatable power calculated by the primary frequency control, resulting in the primary frequency control response not meeting the requirement of the grid. Therefore, according to the exemplary embodiment of the present disclosure, when the power sent by the EMP and the theoretical power calculated by the frequency response device VMP are significantly different, the actual control is not affected, and the response is guaranteed to meet the grid requirements.

In step S104, a corresponding turbine power regulation amount is sent to each wind turbine, to enable the wind turbine to regulate an output power based on the corresponding turbine power regulation amount.

As an example, in a case that a preset time period has passed since a last turbine power regulation amount is sent, the frequency response control method for a wind farm according to the exemplary embodiment of the present disclosure may further include: returning to execute step S103. It should be understood that each time the step S103 is returned, the actual total power-shortage to be used and the regulatable pitch power to be used of each wind turbine in the subsequent preset time period are recently updated ones.

Specifically, as an example, in a case that the total power regulation amount required to be regulated by the wind farm is not changed, the actual total power-shortage exceeds the control dead band, and the period since the last turbine power regulation amount is issued reaches the preset time period, the step S103 is returned to be executed. As an example, in a case that the total power regulation amount required to be regulated by the wind farm is changed, and the preset time period (for example, 200ms) has passed since a last turbine power regulation amount is sent, the step S103 is returned to be executed.

According to the exemplary embodiment of the present disclosure, multi-level cascade control is realized based on the dual closed-loop of the frequency and power of the grid connection point in combination with a small-step power regulation in multiple iterations. In the small-step power regulation in multiple iterations, a planned regulation amount is divided according to a certain step, and the turbine power regulation amount is sent to each wind turbine in multiple iterations according to the step periodically. Here, the frequency and the frequency change rate closed-loop of the grid connection point is the outermost loop control (that is, the first loop control), which is a parameter that directly causes the target value to change. The total power of the grid connection points or the total turbine active power is the middle loop control (that is, the second loop control), which is a parameter that follows the target value of the first loop and is adjusted accordingly. In a case that the target value of the first loop remains unchanged, the second loop periodically detects whether the current power meets the target value of the first loop. The small-step and multiple-iteration control is the innermost loop control (that is, the third loop control), which acts most frequently. After the second loop determines the actual total power-shortage, the division is performed according to the step (that is, the preset time period mentioned above) in the third loop, and then control is performed according to a control amount for each step. After the single-step-controlled cycle ends, the second loop is returned, and this cycle is repeated until the second loop falls into the range of the control dead band. Finally, in a case that the first loop enters the frequency and frequency change rate dead band, the control is completely ended.

FIG. 5 shows an example of a primary frequency control mode according to an embodiment of the present disclosure. That is, a control flow from the second loop to the third loop. The core concept of the "small-step control calculation" is: for a wind turbine with pitch angle regulation capability, the maximum power that can be regulated in a single cycle based on the pre-designed regulation speed is calculated, and then iteration and division are performed based on the maximum power that can be regulated in a single cycle according to actual requirements. The core concept of the "pitch angle ratio algorithm" is: the pitch is definitely changed when the wind turbine power limit is reached, the ratio of the pitch angle is approximately proportional to the power limit depth, and no pitch adjustment is performed during free power generation. Therefore, based on a positive proportional relationship, a weight ratio of each wind turbine to perform power regulation under the current pitch angle is calculated, and then the power regulation is performed based on the weight to achieve the purpose of distribution control.

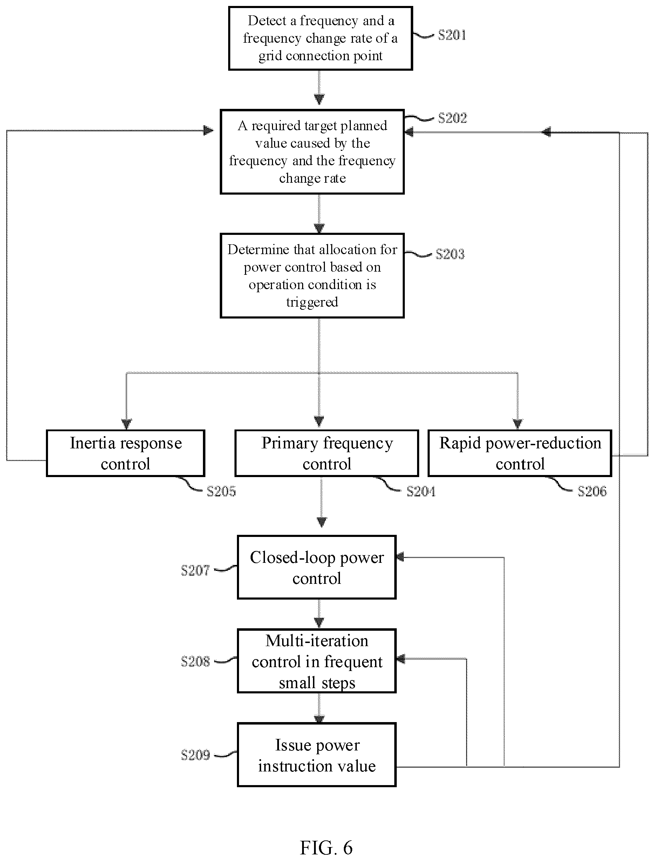

FIG. 6 is a flowchart of a frequency response control method for a wind farm according to another exemplary embodiment of the present disclosure.

As shown in FIG. 6, in step S201, a frequency and a frequency change rate of a grid connection point are detected.

In step S202, a total power regulation amount required to be regulated by the wind farm caused by a frequency and/or a frequency change rate of the grid connection point is periodically determined.

In step S203, an active power regulation mode that the wind farm is required to enter is periodically determined. As an example, the active power regulation mode that the wind farm is required to enter is periodically determined may be determined based on the frequency and frequency change rate of the grid connection point.

As an example, a period for determining the active power regulation mode that the wind farm is required to enter may be 20 ms.

As an example, it can be determined whether the active power regulation mode that the wind farm is required to enter is a first frequency control mode, an inertia response mode, or a rapid power-reduction mode based on the frequency and frequency change rate of the grid connection point by using an appropriate determination strategy.

In step S204, in response to the active power regulation mode that the wind farm is required to enter being the primary frequency control mode, the primary frequency control mode is entered.

In step S205, in response to the active power regulation mode that the wind farm is required to enter being the inertia response mode, the inertia response mode is entered.

In step S206, in response to the active power regulation mode that the wind farm is required to enter being the rapid power-reduction mode, the rapid power-reduction mode is entered. It should be understood that the wind farm is only in one active power regulation mode at the same time.

In step S207, an actual total power-shortage is periodically determined based on a currently-determined total power regulation amount, in a case that the wind farm is in the primary frequency control mode.

In step S208, a turbine power regulation amount of each wind turbine is determined based on the currently-determined actual total power-shortage and a pitch regulatable power of each wind turbine in a subsequent preset time period.

In step S209, a corresponding turbine power regulation amount is sent to each wind turbine, to enable the wind turbine to regulate an output power based on the corresponding turbine power regulation amount. In a case that a preset time period has passed since a last turbine power regulation amount is sent, the step S208 is returned to be executed.

According to an exemplary embodiment of the present disclosure, the primary frequency control is implemented in a three-loop cascade control manner, and the inertia response and the rapid power-reduction are controlled based on in a closed-loop according to the frequency of the grid connection point.

It should be understood that after entering the inertia response mode, the turbine power regulation amount of each wind turbine may be determined by appropriate means, and the corresponding turbine power regulation amount may be issued to each wind turbine, so that each wind turbine regulates the output power based on the corresponding turbine power regulation amount, which is not be repeated here in the present disclosure.

It should be understood that after entering the rapid power-reduction mode, the turbine power regulation amount of each wind turbine may be determined by appropriate means, and the corresponding turbine power regulation amount may be issued to each wind turbine so that each wind turbine regulates the output power based on the corresponding turbine power regulation amount. The wind turbine can consume the reduced active power through a braking resistor in the rapid power-reduction mode, and it is not repeated here in the present disclosure.

In addition, as an example, in response to the inertia response mode being entered, the frequency response control method for the wind farm according to another exemplary embodiment of the present disclosure may also include: in a case that the grid frequency change rate exceeds the frequency change rate dead band and the grid frequency does not exceed the frequency dead band, sending a preset turbine power regulation amount to each wind turbine if the grid frequency change rate returns to the frequency change rate dead band before an inertia response lasting duration is reached; in a case that the grid frequency change rate exceeds the frequency change rate dead band and the grid frequency does not exceed the frequency dead band, sending the preset turbine power regulation amount to each wind turbine if the grid frequency change rate does not return to the frequency change rate dead band when the inertia response lasting duration is reached.

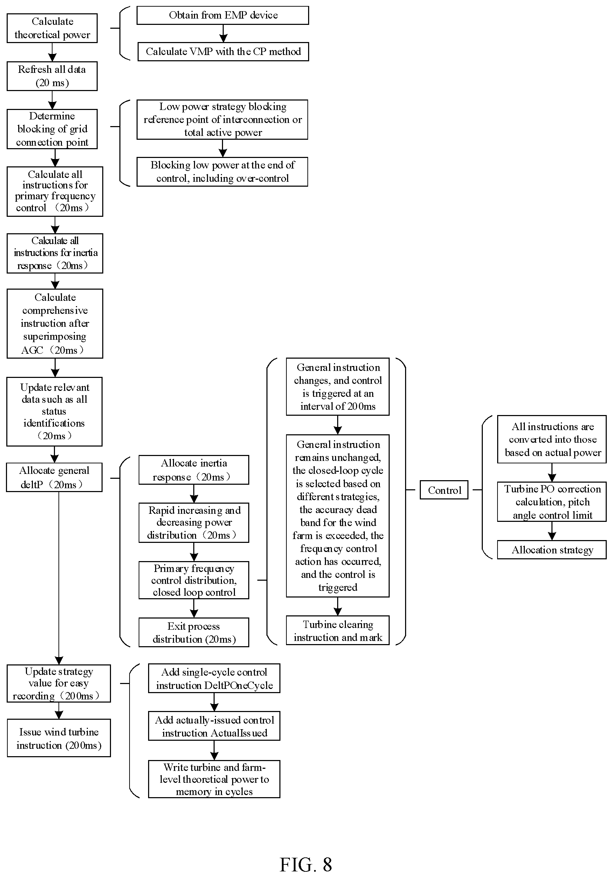

Corresponding regulations is performed for the inertia response in the present disclosure. For each inertia response, regardless of whether the primary frequency control is followed, a small deltP (i.e., the preset turbine power regulation amount) and a slow rate of the primary frequency control are used for transition, and then the control is terminated, that is, the "exit process allocation" in FIG. 8 is executed. After frequency control is performed by using the small deltP, a short section of instructions very close to the target power presents in a process of returning to a mode before the frequency control, which corresponds to the small deltP. After control time for the small deltP is reached, the target value and the enable flag are cleared to 0 to terminate the control.

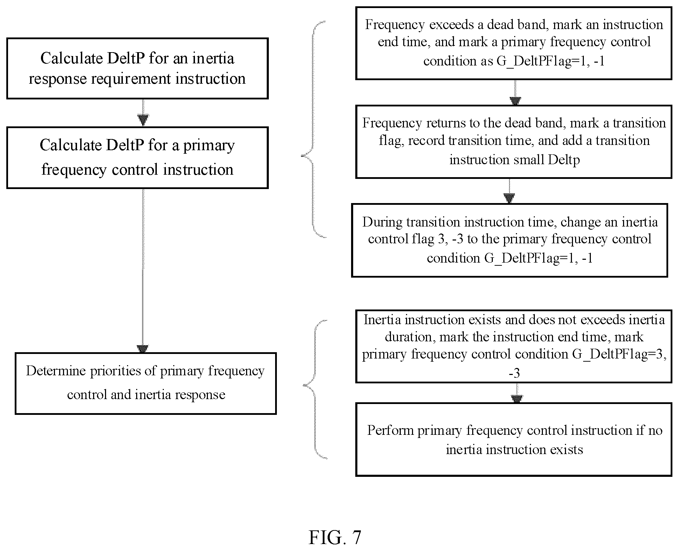

As shown in FIG. 7, 1 represents an increasing power for a primary frequency control, -1 represents a decreasing power for a primary frequency control, and the number represents a working condition. It is forced to return to the primary frequency mode to terminate the control of inertia response, if the control inertia time of the inertia response is expired or the disturbance is ended. Specifically, the following situations are included. 1. The frequency change rate exceeds the dead band, and the frequency does not exceed the dead band. In this situation, the frequency change rate returns to the dead band when the inertia response lasting duration is not reached, the small deltP is followed, and the process is terminated. 2. The frequency change rate exceeds the dead band, and the frequency does not exceed the dead band. In this situation, after the inertia response lasting duration is expired, the frequency change rate does not return to the dead band; and then the process is terminated by performing the small deltP if the duration is reached. 3. The frequency change rate exceeds the dead band, and the frequency also exceeds the dead band. In this situation, if the frequency change rate returns to the dead band before the lasting duration is not reached, the primary frequency control instruction is followed, and then the small deltP is performed to terminate the process. 4. The frequency change rate exceeds the dead band, and the frequency exceeds the dead band. In this situation, if the frequency change rate does not return to the dead band after the duration is expired, the process is terminated by: performing the primary frequency control instruction in response to the duration being expired, and then performing the small deltP.

In addition, as another example, in response to the rapid power-reduction mode being entered, the frequency response control method for a wind farm according to another exemplary embodiment of the present disclosure may also include: in a recovery stage, controlling wind turbines, each with a rapid power-reduction capability, of the wind farm based on a rapid power-reduction recovery manner, and controlling wind turbines, each without the rapid power-reduction capability, of the wind farm based on a primary frequency control recovery manner.

A response rate matching a rapid power-reduction condition is FastPwrRateSet. In the recovery stage, due to the closed-loop control, the actual deficit to be up-regulated is determined according to the current actual situation, by using the current power as a basis. If the actual deficit DeltPReal is a positive number during recovery, the normal up-regulation power allocation will be entered. If the rapid power-reduction mode is triggered during the up-regulation, it is determined whether the turbine state is a fast running state PROT_iAllowPFC = 2. If the turbine state is in the fast running state, fast recovery is activated, otherwise it is recovered at a normal slow rate. If the rapid power-reduction is triggered quickly and it is recovered quickly to the dead band, the rate is FastPwrRateSet. If the rapid power-reduction is triggered quickly and it is recovered to the primary frequency control condition, the recovery rate is the primary frequency control slow rate SlowPwrRateSet. If the rapid power-reduction does not refer to an allowed state of the wind turbine PROT_iAllowPFC = 2, it is likely that the wind turbine runs at the slow rate when the power is reduced, and starts a rapid rate recovery when it recovers, which seems very abrupt. If the rapid power-reduction is triggered quickly and it is recovered to the primary frequency control process, the recovery rate is the primary frequency control slow rate SlowPwrRateSet. Specifically, after the rapid power-reduction mode is activated, some wind turbines do not have the rapid power-reduction ability during allocation. The wind turbines, each without the rapid power-reduction ability, are controlled in a slow primary frequency control manner, and the wind turbines, each with the rapid power-reduction ability, are controlled in the rapid power-reduction manner. However, if all turbine winds are terminated at a fast rate, it appears very abrupt. Therefore, the wind turbine status determination is included at the time of exit. If the wind turbine has the ability to perform rapid regulation at that time, it ends at a fast rate. If the wind turbine does not have the ability to perform rapid regulation, it ends at a slow rate. In addition, when switching from the rapid power-reduction mode to the primary frequency control mode, all wind turbines terminate control at a slow rate at this time.

According to an exemplary embodiment of the present disclosure, considering that the small-step fast regulation for primary frequency control involves inertia response and rapid power-reduction control, after the small-step fast regulation control method is introduced, corresponding regulations are made to the inertia response and rapid power-reduction.

FIG. 8 is a flowchart of a frequency response control method for a wind farm according to another exemplary embodiment of the present disclosure. Here, a CP method refers to determining a theoretical power of the wind turbine based on the current pitch angle and wind speed of the wind turbine using a theoretical power table. The comprehensive instruction is the total power regulation amount required to be regulated by the wind farm.

According to the exemplary embodiments of the present disclosure, the problem of long frequency control response time in wind farms can be solved; the accuracy of frequency control throughout the wind farm can be improved; the dependence of frequency response control on theoretical power can be reduced; and the problem of unqualified frequency control due to algorithm differences among different control devices can be avoided.

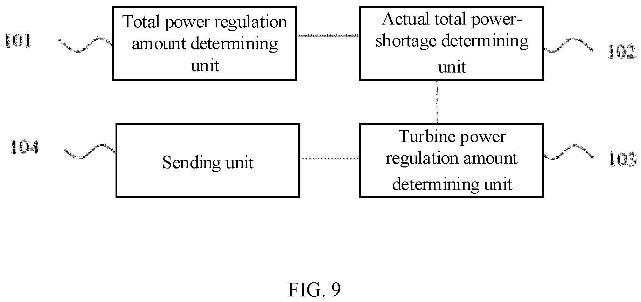

FIG. 9 is a structural block diagram of a frequency response control apparatus for a wind farm according to an exemplary embodiment of the present disclosure.

As shown in FIG. 9, the frequency response control apparatus for a wind farm according to an exemplary embodiment of the present disclosure includes: a total power regulation amount determining unit 101, an actual total power-shortage determining unit 102, a turbine power regulation amount determining unit 103, and a sending unit 104.

The total power regulation amount determining unit 101 is configured to periodically determine a total power regulation amount required to be regulated by the wind farm caused by a frequency and/or a frequency change rate of a grid connection point.

The actual total power-shortage determining unit 102 is configured to periodically determine an actual total power-shortage based on a currently-determined total power regulation amount, in a case that the wind farm is in a primary frequency control mode.

The turbine power regulation amount determining unit 103 is configured to determine a turbine power regulation amount of each wind turbine based on a currently-determined actual total power shortage and a pitch regulatable power of each wind turbine in a subsequent preset time period.

The sending unit 104 is configured to send a corresponding turbine power regulation amount to each wind turbine, to enable the wind turbine to regulate an output power based on the corresponding turbine power regulation amount.

As an example, the turbine power regulation amount determining unit 103 may be further configured to, in a case that a preset time period has passed since a last turbine power regulation amount is sent, determine the turbine power regulation amount of each wind turbine based on the currently-determined actual total power shortage and the pitch regulatable power of each wind turbine in the subsequent preset time period.

As an example, the frequency response control apparatus for a wind farm may further include: an active power regulation mode determining unit (not shown in the figure), configured to periodically determine an active power regulation mode that the wind farm is required to enter based on the frequency and the frequency change rate of the grid connection point; entering the primary frequency control mode, in response to the active power regulation mode that the wind farm is required to enter being the primary frequency control mode; entering an inertia response mode, in response to the active power regulation mode that the wind farm is required to enter being the inertia response mode; and entering to a rapid power-reduction mode, in response to the active power regulation mode that the wind farm is required to enter being the rapid power-reduction mode; where the wind farm is in one active power regulation mode at the same time.

As an example, the pitch regulatable power of each wind turbine in the subsequent preset time period includes: a pitch power increasing limit of the wind turbine in the subsequent preset time period and a pitch power decreasing limit of the wind turbine in the subsequent preset time period, where a pitch power increasing limit of a wind turbine having a pitch angle greater than a minimum pitch angle and having a power less than a maximum power limit in the subsequent preset time period is: a product of a preset pitch power increasing limit of the wind turbine per unit time, the preset time period, and a first conversion deviation coefficient; and a pitch power decreasing limit of a wind turbine having a pitch angle not equal to a standby pitch angle and having a power greater than or equal to a minimum power limit is: a product of a preset pitch power decreasing limit of the wind turbine per unit time, the preset time period, and a second conversion deviation coefficient.

As an example, the turbine power regulation amount determining unit 103 may be configured to: in response to the currently-determined actual total power shortage being greater than 0, determine a total up-regulation power amount in the subsequent preset time period based on a total up-regulation reserve power in the subsequent preset time period and the currently-determined actual total power shortage, and determine the turbine power regulation amount of each wind turbine based on the total up-regulation power amount in the subsequent preset time period; and in response to the currently-determined actual total power shortage being less than 0, determine a total down-regulation power amount in the subsequent preset time period based on a total down-regulation reserve power in the subsequent preset time period and the currently-determined actual total power shortage, and determine the turbine power regulation amount of each wind turbine based on the total down-regulation power amount in the subsequent preset time period, where the total up-regulation reserve power in the subsequent preset time period is a sum of pitch power increasing limits of wind turbines in the subsequent preset time period; and the total down-regulation reserve power in the subsequent preset time period is a sum of pitch power decreasing limits of wind turbines in the subsequent preset time period.

As an example, the turbine power regulation amount determining unit 103 may be configured to: determine the actual total power shortage as the total up-regulation power amount in the subsequent preset time period, in response to the total up-regulation reserve power in the subsequent preset time period being greater than the actual total power shortage; and determine the total up-regulation reserve power in the subsequent preset time period as the total up-regulation power amount in the subsequent preset time period, in response to the total up-regulation reserve power in the subsequent preset time period being less than the actual total power shortage.

As an example, the turbine power regulation amount determining unit 103 may be configured to: determine the actual total power shortage as the total down-regulation power amount in the subsequent preset time period, in response to the total down-regulation reserve power in the subsequent preset time period being less than the actual total power shortage; and determine the total down-regulation reserve power in the subsequent preset time period as the total down-regulation power amount in the subsequent preset time period, in response to the total down-regulation reserve power in the subsequent preset time period being greater than the actual total power shortage.

As an example, the turbine power regulation amount determining unit 103 may be configured to: for each wind turbine having a pitch angle greater than the minimum pitch angle and having a power less than the maximum power limit, determine a sum of a product of an up-regulation weight coefficient of the wind turbine and a total up-regulation power amount in the subsequent preset time period, and a deviation correction value as the turbine power regulation amount for the wind turbine, where the up-regulation weight coefficient of the wind turbine is: a ratio of a pitch up-regulation power capability of the wind turbine to a sum of pitch up-regulation power capabilities of wind turbines, and the pitch up-regulation power capability of the wind turbine is a product of a difference between an average pitch angle of the wind turbine and a minimum pitch angle of the wind turbine, and a rated power of the wind turbine.

As an example, the turbine power regulation amount determining unit 103 may be configured to: for each wind turbine having a pitch angle not equal to the standby pitch angle and having a power not less than the minimum power limit, determine a sum of a product of a down-regulation weight coefficient of the wind turbine and a total down-regulation power amount in the subsequent preset time period, and a deviation correction value as the turbine power regulation amount for the wind turbine, where the down-regulation weight coefficient of the wind turbine is: a ratio of a pitch down-regulation power capability of the wind turbine to a sum of pitch down-regulation power capabilities of wind turbines, and the pitch down-regulation power capability of the wind turbine is a product of a difference between a standby pitch angle of the wind turbine and an average pitch angle of the wind turbine, and a rated power of the wind turbine.

As an example, the deviation correction value for each wind turbine may be:

a difference between a current actual power value of the wind turbine and an initial power value of the wind turbine at the beginning of a current grid frequency disturbance.

As an example, the frequency response control apparatus for a wind farm may further comprises an inertia response controlling unit(not shown in the figure) configured to: in a case that a grid frequency change rate exceeds a frequency change rate dead band and a grid frequency does not exceed a frequency dead band, send a preset turbine power regulation amount to each wind turbine if the grid frequency change rate returns to the frequency change rate dead band before an inertia response duration is reached; and in a case that the grid frequency change rate exceeds the frequency change rate dead band and the grid frequency does not exceed the frequency dead band, send the preset turbine power regulation amount to each wind turbine if the grid frequency change rate does not return to the frequency change rate dead band when the inertia response duration is reached.

As an example, the frequency response control apparatus for a wind farm may further comprises a rapid power-reduction controlling unit (not shown in the figure) configured to, in a recovery stage, control a wind turbine with a rapid power-reduction capability in the wind farm based on a rapid power-reduction recovery manner, and controlling a wind turbine without the rapid power-reduction capability in the wind farm based on a primary frequency control recovery manner.

As an example, the frequency response control apparatus for a wind farm may be arranged in a controller of the wind farm.

It should be understood that the processes performed by the frequency response control apparatus for a wind farm according to the exemplary embodiment of the present disclosure are described in detail with reference to FIGs. 1 to 8, and relevant details are not repeated here.

It should be understood that each unit in the frequency response control apparatus for a wind farm according to the exemplary embodiments of the present disclosure may be implemented through hardware components and/or software components. Those skilled in the art may implement the various units for example by utilizing a field programmable gate array (FPGA) or an application specific integrated circuit (ASIC) based on the processes performed by various defined units.

A computer-readable storage medium storing a computer program is provided according to an exemplary embodiment of the present disclosure. The computer program, when executed by a processor, prompting the processor to execute the frequency response control method for a wind farm according to the exemplary embodiments described above. The computer readable storage medium may be any data storage apparatus capable of storing data that is read by a computer system. Examples of the computer readable storage medium include: a read only memory, a random access memory, a read only optical disc, a magnetic tape, a floppy disk, an optical data storage apparatus, and a carrier wave (such as data transmission through the Internet via a wired or wireless transmission path).

The frequency response control device for a wind farm includes: a processor (not shown in the figure) and a memory(not shown in the figure), where the memory stores a computer program, and the computer program, when executed by the processor, prompting the processor to execute the frequency response control method for a wind farm according to the exemplary embodiments described above.

As an example, the frequency response control device for a wind farm may be arranged in a controller of the wind farm.

Although the present disclosure has been illustrated and described with reference to some embodiments thereof, it should be understood by those skilled in the art that various modifications may be made to the embodiments without departing from the principle and spirit of the present disclosure as defined in the claims and equivalents thereof.

## Claims

1. A frequency response control method for a wind farm, comprising:

   periodically determining a total power regulation amount required to be regulated by the wind farm caused by a frequency and/or a frequency change rate of a grid connection point;
   periodically determining an actual total power-shortage based on a currently-determined total power regulation amount, in a case that the wind farm is in a primary frequency control mode;
   determining a turbine power regulation amount of each wind turbine based on a currently-determined actual total power-shortage and a pitch regulatable power of each wind turbine in a subsequent preset time period; and
   sending a corresponding turbine power regulation amount to each wind turbine, to enable the wind turbine to regulate an output power based on the corresponding turbine power regulation amount.

2. The frequency response control method according to claim 1, wherein in a case that a preset time period has passed since a last turbine power regulation amount is sent, the method further comprises: returning to execute a step of determining a turbine power regulation amount of each wind turbine based on a currently-determined actual total power-shortage and a pitch regulatable power of each wind turbine in a subsequent preset time period.

3. The frequency response control method according to claim 1, further comprising:

   periodically determining an active power regulation mode that the wind farm is required to enter based on the frequency and the frequency change rate of the grid connection point;
   entering the primary frequency control mode, in response to the active power regulation mode that the wind farm is required to enter being the primary frequency control mode;
   entering an inertia response mode, in response to the active power regulation mode that the wind farm is required to enter being the inertia response mode; and
   entering to a rapid power-reduction mode, in response to the active power regulation mode that the wind farm is required to enter being the rapid power-reduction mode;
   wherein the wind farm is in one active power regulation mode at the same time.

4. The frequency response control method according to claim 1 or 2, wherein the pitch regulatable power of each wind turbine in the subsequent preset time period comprises: a pitch power increasing limit of the wind turbine in the subsequent preset time period and a pitch power decreasing limit of the wind turbine in the subsequent preset time period;

   a pitch power increasing limit of a wind turbine having a pitch angle greater than a minimum pitch angle and having a power less than a maximum power limit in the subsequent preset time period is: a product of a preset pitch power increasing limit of the wind turbine per unit time, the preset time period, and a first conversion deviation coefficient; and
   a pitch power decreasing limit of a wind turbine having a pitch angle not equal to a standby pitch angle and having a power greater than or equal to a minimum power limit is: a product of a preset pitch power decreasing limit of the wind turbine per unit time, the preset time period, and a second conversion deviation coefficient.

5. The frequency response control method according to claim 1 or 2, wherein the determining a turbine power regulation amount of each wind turbine based on a currently-determined actual total power-shortage and a pitch regulatable power of each wind turbine in a subsequent preset time period comprises:

   in response to the currently-determined actual total power-shortage being greater than 0, determining a total up-regulation power amount in the subsequent preset time period based on a total up-regulation reserve power in the subsequent preset time period and the currently-determined actual total power-shortage, and determining the turbine power regulation amount of each wind turbine based on the total up-regulation power amount in the subsequent preset time period; and
   in response to the currently-determined actual total power-shortage being less than 0, determining a total down-regulation power amount in the subsequent preset time period based on a total down-regulation reserve power in the subsequent preset time period and the currently-determined actual total power-shortage, and determining the turbine power regulation amount of each wind turbine based on the total down-regulation power amount in the subsequent preset time period;
   wherein the total up-regulation reserve power in the subsequent preset time period is a sum of pitch power increasing limits of wind turbines in the subsequent preset time period;

and the total down-regulation reserve power in the subsequent preset time period is a sum of pitch power decreasing limits of wind turbines in the subsequent preset time period.

6. The frequency response control method according to claim 5, wherein the determining a total up-regulation power amount in the subsequent preset time period based on a total up-regulation reserve power in the subsequent preset time period and the currently-determined actual total power-shortage comprises:

determining the actual total power-shortage as the total up-regulation power amount in the subsequent preset time period, in response to the total up-regulation reserve power in the subsequent preset time period being greater than the actual total power-shortage; and determining the total up-regulation reserve power in the subsequent preset time period as the total up-regulation power amount in the subsequent preset time period, in response to the total up-regulation reserve power in the subsequent preset time period being less than the actual total power-shortage.

7. The frequency response control method m according to claim 5, wherein the determining a total down-regulation power amount in the subsequent preset time period based on a total down-regulation reserve power in the subsequent preset time period and the currently-determined actual total power-shortage comprises:

determining the actual total power-shortage as the total down-regulation power amount in the subsequent preset time period, in response to the total down-regulation reserve power in the subsequent preset time period being less than the actual total power-shortage; and determining the total down-regulation reserve power in the subsequent preset time period as the total down-regulation power amount in the subsequent preset time period, in response to the total down-regulation reserve power in the subsequent preset time period being greater than the actual total power-shortage.

8. The frequency response control method according to claim 5, wherein the determining the turbine power regulation amount of each wind turbine based on the total up-regulation power amount in the subsequent preset time period comprises:

for each wind turbine having a pitch angle greater than the minimum pitch angle and having a power not less than the maximum power limit, determining a sum of a product of an up-regulation weight coefficient of the wind turbine and a total up-regulation power amount in the subsequent preset time period, and a deviation correction value as the turbine power regulation amount for the wind turbine; wherein the up-regulation weight coefficient of the wind turbine is: a ratio of a pitch up-regulation power capability of the wind turbine to a sum of pitch up-regulation power capabilities of wind turbines, and the pitch up-regulation power capability of the wind turbine is a product of a difference between an average pitch angle of the wind turbine and a minimum pitch angle of the wind turbine, and a rated power of the wind turbine.

9. The frequency response control method according to claim 5, wherein the determining the turbine power regulation amount of each wind turbine based on the total down-regulation power amount in the subsequent preset time period comprises:

for each wind turbine having a pitch angle not equal to the standby pitch angle and having a power not less than the minimum power limit, determining a sum of a product of a down-regulation weight coefficient of the wind turbine and a total down-regulation power amount in the subsequent preset time period, and a deviation correction value as the turbine power regulation amount for the wind turbine; wherein the down-regulation weight coefficient of the wind turbine is: a ratio of a pitch down-regulation power capability of the wind turbine to a sum of pitch down-regulation power capabilities of wind turbines, and the pitch down-regulation power capability of the wind turbine is a product of a difference between a standby pitch angle of the wind turbine and an average pitch angle of the wind turbine, and a rated power of the wind turbine.

10. The frequency response control method according to claim 8 or 9, wherein the deviation correction value for each wind turbine is:
a difference between a current actual power value of the wind turbine and an initial power value of the wind turbine at the beginning of a current grid frequency disturbance.

11. The frequency response control method according to claim 3, wherein in response to the wind farm being in the inertia response mode, the method further comprises:

in a case that a grid frequency change rate exceeds a frequency change rate dead band and a grid frequency does not exceed a frequency dead band, sending a preset turbine power regulation amount to each wind turbine if the grid frequency change rate returns to the frequency change rate dead band before an inertia response duration is reached; and
in a case that the grid frequency change rate exceeds the frequency change rate dead band and the grid frequency does not exceed the frequency dead band, sending the preset turbine power regulation amount to each wind turbine if the grid frequency change rate does not return to the frequency change rate dead band when the inertia response lasting duration is reached.

12. The frequency response control method according to claim 3, wherein in response to the wind farm being in the rapid power-reduction mode, the method further comprises:
in a recovery stage, controlling a wind turbine with a rapid power-reduction capability in the wind farm based on a rapid power-reduction recovery manner, and controlling a wind turbine without the rapid power-reduction capability in the wind farm based on a primary frequency control recovery manner.

13. A frequency response control apparatus for a wind farm, comprising:

a total power regulation amount determining unit, configured to periodically determine a total power regulation amount required to be regulated by the wind farm caused by a frequency and/or a frequency change rate of a grid connection point;
an actual total power-shortage determining unit, configured to periodically determine an actual total power-shortage based on a currently-determined total power regulation amount, in a case that the wind farm is in a primary frequency control mode;
a turbine power regulation amount determining unit, configured to determine a turbine power regulation amount of each wind turbine based on a currently-determined actual total power-shortage and a pitch regulatable power of each wind turbine in a subsequent preset time period; and
a sending unit, configured to send a corresponding turbine power regulation amount to each wind turbine, to enable the wind turbine to regulate an output power based on the corresponding turbine power regulation amount.

14. A computer-readable storage medium storing a computer program, wherein the computer program, when executed by a processor, prompting the processor to execute the frequency response control method for a wind farm according to any one of claims 1 to 12.

15. A frequency response control device for a wind farm, comprising:

a processor; and
a memory storing a computer program, wherein the computer program, when executed by the processor, prompting the processor to execute the frequency response control method for a wind farm according to any one of claims 1 to 12.

FIG. 1

FIG. 2

FIG. 3

A total power regulation amount required to be regulated by the wind farm caused by a frequency and/or a frequency change rate of a grid connection point is periodically determined

S101

An actual total power-shortage is periodically determined based on a currently-determined total power regulation amount, in a case that the wind farm is in a primary frequency control mode

S102

A turbine power regulation amount of each wind turbine is determined based on a currently-determined actual total power shortage and a pitch regulatable power of each wind turbine in a subsequent preset time period

S103

A corresponding turbine power regulation amount is sent to each wind turbine, to enable the wind turbine to regulate an output power based on the corresponding turbine power regulation amount

S104

FIG. 4

| Actual total power-shortage | Small step control calculation | Pitch angle ratio algorithm | Issue turbine control instruction |

FIG. 5

Detect a frequency and a
frequency change rate of a
grid connection point — S201

A required target planned
value caused by the
frequency and the frequency
change rate — S202

Determine that allocation for
power control based on
operation condition is
triggered — S203

Inertia response
control — S205

Primary frequency
control — S204

Rapid power-reduction
control — S206

Closed-loop power
control — S207

Multi-iteration
control in frequent
small steps — S208

Issue power
instruction value — S209

FIG. 6

Calculate DeltP for an inertia response requirement instruction

Calculate DeltP for a primary frequency control instruction

Determine priorities of primary frequency control and inertia response

Frequency exceeds a dead band, mark an instruction end time, and mark a primary frequency control condition as G_DeltPFlag=1, -1

Frequency returns to the dead band, mark a transition flag, record transition time, and add a transition instruction small Deltp

During transition instruction time, change an inertia control flag 3, -3 to the primary frequency control condition G_DeltPFlag=1, -1

Inertia instruction exists and does not exceeds inertia duration, mark the instruction end time, mark primary frequency control condition G_DeltPFlag=3, -3

Perform primary frequency control instruction if no inertia instruction exists

FIG. 7

Calculate theoretical power

Obtain from EMP device

↓

Calculate VMP with the CP method

↓

Refresh all data (20 ms)

↓

Determine blocking of grid connection point

Low power strategy blocking reference point of interconnection or total active power

↓

Blocking low power at the end of control, including over-control

↓

Calculate all instructions for primary frequency control （20ms）

↓

Calculate all instructions for inertia response（20ms）

↓

Calculate comprehensive instruction after superimposing AGC（20ms）

↓

Update relevant data such as all status identifications（20ms）

↓

Allocate general deltP（20ms）

Allocate inertia response（20ms）

↓

Rapid increasing and decreasing power distribution（20ms）

↓

Primary frequency control distribution, closed loop control

↓

Exit process distribution (20ms)

General instruction changes, and control is triggered at an interval of 200ms

↓

General instruction remains unchanged, the closed-loop cycle is selected based on different strategies, the accuracy dead band for the wind farm is exceeded, the frequency control action has occurred, and the control is triggered

↓

Turbine clearing instruction and mark

Control

All instructions are converted into those based on actual power

↓

Turbine PO correction calculation, pitch angle control limit

↓

Allocation strategy

↓

Update strategy value for easy recording（200ms）

Add single-cycle control instruction DeltPOneCycle

↓

Add actually-issued control instruction ActualIssued

↓

Write turbine and farm-level theoretical power to memory in cycles

↓

Issue wind turbine instruction (200ms)

FIG. 8

FIG. 9

## INTERNATIONAL SEARCH REPORT

| International application No. |
|---|
| **PCT/CN2023/108874** |

| A. | CLASSIFICATION OF SUBJECT MATTER |
|---|---|

H02J 3/24(2006.01)i; H02J3/46(2006.01)i

According to International Patent Classification (IPC) or to both national classification and IPC

| B. | FIELDS SEARCHED |
|---|---|

Minimum documentation searched (classification system followed by classification symbols)

IPC:H02J

Documentation searched other than minimum documentation to the extent that such documents are included in the fields searched

Electronic data base consulted during the international search (name of data base and, where practicable, search terms used)

CNTXT; ENTXT; ENTXTC; DWPI; CNKI: 变桨, 缺额, 一次调频, 单机功率, 变化率; pitch, vacancy, primary frequency regulation, single unit power, rate of change.

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 112003298 A (CHINA ELECTRIC POWER RESEARCH INSTITUTE CO., LTD. et al.) 27 November 2020 (2020-11-27) description, paragraphs 52-101 | 1, 13-15 |
| A | CN 112003298 A (CHINA ELECTRIC POWER RESEARCH INSTITUTE CO., LTD. et al.) 27 November 2020 (2020-11-27) entire document | 2-12 |
| A | CN 112072678 A (BEIJING GUODIAN POWER NEW ENERGY TECHNOLOGY CO., LTD. et al.) 11 December 2020 (2020-12-11) entire document | 1-15 |
| A | CN 108306312 A (CORONA WIND ENERGY EQUIPMENT (BEIJING) CO., LTD. et al.) 20 July 2018 (2018-07-20) entire document | 1-15 |
| A | US 2018073486 A1 (ABB SCHWEIZ AG et al.) 15 March 2018 (2018-03-15) entire document | 1-15 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 October 2023** | **25 October 2023** |

| Name and mailing address of the ISA/CN | Authorized officer |
|---|---|
| **China National Intellectual Property Administration (ISA/CN) China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/108874**

| Patent document cited in search report | | | Publication date (day/month/year) | Patent family member(s) | | | Publication date (day/month/year) |
|---|---|---|---|---|---|---|---|
| CN | 112003298 | A | 27 November 2020 | None | | | |
| CN | 112072678 | A | 11 December 2020 | None | | | |
| CN | 108306312 | A | 20 July 2018 | None | | | |
| US | 2018073486 | A1 | 15 March 2018 | EP | 3298273 | A1 | 28 March 2018 |
| | | | | EP | 3298273 | B1 | 04 March 2020 |
| | | | | ES | 2793333 | T3 | 13 November 2020 |
| | | | | US | 10605229 | B2 | 31 March 2020 |
| | | | | WO | 2016184915 | A1 | 24 November 2016 |
| | | | | EP | 3096004 | A1 | 23 November 2016 |
| | | | | CN | 108368827 | A | 03 August 2018 |
| | | | | CN | 108368827 | B | 01 January 2021 |

Form PCT/ISA/210 (patent family annex) (July 2022)